# EUROPEAN PATENT APPLICATION

(11) **EP 4 716 340 A1**
(43) Date of publication of application: **25.03.2026**
(21) Application number: 24835241.1
(22) Date of filing: 21.06.2024
(51) Int. Cl.: H04W 72/0446

(54) **COMMUNICATION METHOD AND COMMUNICATION APPARATUS**

(30) Priority: 04.07.2023 CN 202310813547
(71) Applicant: Huawei Technologies Co., Ltd., Shenzhen, Guangdong 518129 (CN)
(72) Inventor: XIE, Xinqian, Shenzhen, Guangdong 518129 (CN); LU, Jianzhong, Shenzhen, Guangdong 518129 (CN); SHAO, Jiafeng, Shenzhen, Guangdong 518129 (CN)
(74) Representative: MERH-IP Matias Erny Reichl Hoffmann Patentanwälte PartG mbB
(86) International application number: PCT/CN2024/100635
(87) International publication number: WO 2025/007758

(57) **Abstract**

This application provides a communication method and a communication apparatus. The method includes: A network device sends first indication information to a terminal device, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, the network device sends the first signal and the second signal to the terminal device; or when the first indication information indicates that the first signal is not associated with the second signal, the network device sends the first signal to the terminal device. Correspondingly, the terminal device receives the first indication information, and demodulates the first signal based on the first indication information. The method provided in this application helps improve communication efficiency of a communication signal.

## Description

This application claims priority to Chinese Patent Application No. 202310813547.2, filed with the China National Intellectual Property Administration on July 4, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

In an evolution process from a 5th generation (5th generation, 5G) mobile communication system to a 5G-advanced (5G-advanced, 5G-A) technology, an integrated sensing and communication technology is considered to be one of key technologies that can extend a service capability of a mobile communication network. A core idea of this technology is to add a sensing capability to the mobile communication network, and construct a capability of detecting, tracking, and imaging a target, so that communication and sensing capabilities are integrated into one network, thereby implementing harmonious coexistence or even mutual benefit.

In an integrated sensing and communication scenario, a network device may simultaneously send a sensing signal and a communication signal to a terminal device. The sensing signal is for obtaining information such as a position, a speed, and a type of the terminal device, and the communication signal is for transmitting data information or control information. The terminal device obtains the sensing signal and the communication signal, and parses the communication signal, to obtain the data information or the control information transmitted by using the communication signal.

However, the integrated sensing and communication technology has the following technical problem: Communication efficiency of the communication signal is low.

### SUMMARY

This application provides a communication method and a communication apparatus, to help improve communication efficiency of a communication signal.

According to a first aspect, a communication method is provided. The method may be performed by a terminal device, or may be performed by a module (for example, a processor, a chip, or a chip system) used in the terminal device, or may be implemented by a logical node, a logical module, or software that can implement all or a part of functions of the terminal device. The method includes: receiving first indication information, where the first indication information indicates that a first signal in a first time period is associated with a second signal or is not associated with the second signal, the first signal is used for communication, and the second signal is used for one or more of communication, sensing, or power transfer; when the first indication information indicates that the first signal is associated with the second signal, receiving the first signal and the second signal; or when the first indication information indicates that the first signal is not associated with the second signal, receiving the first signal; and demodulating the first signal based on the first indication information.

The first signal is used for communication, in other words, the first signal may include control information or data information. The first signal may also be referred to as a communication signal, which is not limited in this application. The second signal is used for one or more of communication, sensing, or power transfer. If the second signal is used for sensing, in other words, the second signal is used for obtaining information such as a position, a speed, and a type of the terminal device, the second signal may also be referred to as a sensing signal, which is not limited in this application.

In a possible implementation, the first indication information indicates that the first signal in the first time period is associated with the second signal. In other words, an association exists between the first signal in the first time period and the second signal. If the association exists between the first signal and the second signal, it indicates that the terminal device is in an integrated sensing and communication scenario. The first signal in the first time period indicates that the first signal is sent or received in the first time period. The first time period indicates duration. A length of the first time period is not specifically limited in embodiments of this application.

When the first indication information indicates that the first signal is associated with the second signal, the first signal and the second signal may be received, and interference from the second signal may be eliminated during the demodulation on the first signal.

In this implementation, it can be determined, based on the first indication information, that the second signal causes interference to the demodulation on the first signal. Therefore, during the demodulation on the first signal, the interference from the second signal can be eliminated, thereby improving communication efficiency of the first signal.

In another possible implementation, the first indication information indicates that the first signal in the first time period is not associated with the second signal. In other words, the first signal in the first time period has no associated second signal. If no association exists between the first signal and the second signal, it indicates that the second signal does not cause interference to the first signal. In other words, a network device does not send the second signal for sensing, and the second signal does not cause interference to the first signal.

When the first indication information indicates that the first signal is not associated with the second signal, the first signal may be received, and the second signal does not need to be considered during the demodulation on the first signal.

In this implementation, the terminal device can determine, based on the first indication information, that the second signal does not cause interference to the demodulation on the first signal. Therefore, during the demodulation on the first signal, the interference from the second signal may not be considered, thereby improving demodulation efficiency of the first signal.

With reference to the first aspect, in some implementations of the first aspect, when the first indication information indicates that the first signal is associated with the second signal, the first indication information further indicates a type of the second signal, and the type of the second signal includes one of a communication signal, a sensing signal, a sensing-communication signal, or a power transfer signal.

The type of the second signal may be a sensing signal, or may be a communication signal, or may be a sensing-communication signal (namely, a signal used for both communication and sensing), or another signal with a function other than communication and sensing, for example, a power transfer signal (namely, a signal used for energy transfer). When the type of the second signal is a communication signal, the second signal may be a data signal, a control signal, or a reference signal.

It should be noted that, when the first indication information indicates the type of the second signal, the first indication information is not limited to directly indicating a function of the second signal, such as sensing, communication, or power transfer, and may implicitly indicate a type index of the second signal, such as a first type, a second type, or a third type. The first type may indicate that the type of the second signal is a sensing signal, the second type may indicate that the type of the second signal is a communication signal, and the third type may indicate that the type of the second signal is a power transfer signal.

When the first indication information indicates that the first signal is associated with the second signal, the first indication information further indicates the type of the second signal, and the terminal device can determine a type feature of the second signal based on the first indication information, to select an appropriate receiving method to eliminate the interference from the second signal to the first signal, thereby improving receiving performance of the first signal.

With reference to the first aspect, in some implementations of the first aspect, when the first indication information indicates that the first signal is associated with the second signal, the first indication information further indicates a relative power value between the first signal and the second signal.

The relative power value between the first signal and the second signal indicates a power difference between first power and second power in a direction in which the terminal device receives the second signal. The relative power value may be positive, may be negative, or may be zero. This is not limited in this application. A unit of the relative power value may be decibel (dB), but this is not limited in this application.

That the first indication information indicates the relative power value between the first signal and the second signal includes a plurality of possible implementations.

In a possible implementation, the first indication information may include one value, and the value is the relative power value between the first signal and the second signal. This implementation is simple and direct. The terminal device may directly obtain the relative power value between the first signal and the second signal from the first indication information.

In another possible implementation, the first indication information may include a plurality of relative power values, and one of the plurality of relative power values is the relative power value between the first signal and the second signal. In this case, the terminal device may also receive another piece of indication information from the network device, and the indication information indicates an index value of the relative power value between the first signal and the second signal in the foregoing plurality of relative power values. Alternatively, the terminal device receives another piece of indication information from the network device, and the indication information indicates a plurality of relative power values of the first signal and the second signal. The terminal device also receives the first indication information from the network device, and the first indication information indicates the index value of the relative power value between the first signal and the second signal in the foregoing plurality of relative power values. The plurality of relative power values may be referred to as candidate values of the relative power value. This is not limited in this application.

In this implementation, two pieces of indication information indirectly indicate the relative power value between the first signal and the second signal. Compared with direct indication, the indirect indication improves security of information transmission.

With reference to the first aspect, in some implementations of the first aspect, when the first indication information indicates that the first signal is associated with the second signal, the method further includes: receiving second indication information, where the second indication information indicates at least one of a sequence of the second signal, a frequency domain coefficient of the second signal, or a time domain position of the second signal; and demodulating the first signal based on the first indication information includes: demodulating the first signal based on the first indication information and the second indication information.

When the first indication information indicates that the first signal is associated with the second signal, the terminal device needs to consider eliminating interference from the second signal when demodulating the first signal. The terminal device may receive the second indication information from the network device, where the second indication information indicates a feature parameter of the second signal, for example, at least one of the sequence of the second signal, the frequency domain coefficient of the second signal, or the time domain position of the second signal, so that the terminal device eliminates, based on such information, the interference from the second signal when demodulating the first signal.

The second indication information indicates at least one of the sequence of the second signal, the frequency domain coefficient of the second signal, or the time domain position of the second signal. In this case, in an example, the second indication information may indicate the sequence of the second signal, the frequency domain coefficient of the second signal, or the time domain position of the second signal; in another example, the second indication information may indicate two of the sequence of the second signal, the frequency domain coefficient of the second signal, or the time domain position of the second signal; or in still another example, the second indication information may indicate the sequence of the second signal, the frequency domain coefficient of the second signal, and the time domain position of the second signal. It may be understood that a larger quantity of feature parameters that are of the second signal and that are indicated by the second indication information is more helpful for the terminal device to eliminate the interference from the second signal when the terminal device demodulates the first signal.

In this implementation, the terminal device obtains at least one of the sequence of the second signal, the frequency domain coefficient of the second signal, or the time domain position of the second signal from the second indication information. This helps the terminal device better eliminate the interference caused by the second signal when the terminal device demodulates the first signal.

With reference to the first aspect, in some implementations of the first aspect, the second indication information is carried in radio resource control (radio resource control, RRC) layer signaling or media access control (media access control, MAC) layer signaling.

With reference to the first aspect, in some implementations of the first aspect, the first indication information is carried in downlink control information (downlink control information, DCI).

According to a second aspect, a communication method is provided. The method may be performed by a network device, or may be performed by a module (for example, a processor, a chip, or a chip system) used in the network device, or may be implemented by a logical node, a logical module, or software that can implement all or a part of functions of the network device. The method includes: sending first indication information, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, sending the first signal and the second signal; or when the first indication information indicates that the first signal is not associated with the second signal, sending the first signal.

With reference to the second aspect, in some implementations of the second aspect, the method further includes: when sending the first signal and the second signal, receiving an echo signal of the second signal, and performing sensing based on the echo signal.

With reference to the second aspect, in some implementations of the second aspect, when the first indication information indicates that the first signal is associated with the second signal, the first indication information further indicates a type of the second signal, and the type of the second signal includes one of a communication signal, a sensing signal, a sensing-communication signal, or a power transfer signal.

With reference to the second aspect, in some implementations of the second aspect, when the first indication information indicates that the first signal is associated with the second signal, the first indication information further indicates a relative power value between the first signal and the second signal.

With reference to the second aspect, in some implementations of the second aspect, the method further includes: when the first indication information indicates that the first signal is associated with the second signal, sending second indication information, where the second indication information indicates at least one of a sequence of the second signal, a frequency domain coefficient of the second signal, or a time domain position of the second signal.

With reference to the second aspect, in some implementations of the second aspect, the second indication information is carried in radio resource control RRC layer signaling or media access control MAC layer signaling.

With reference to the second aspect, in some implementations of the second aspect, the first indication information is carried in downlink control information DCI.

According to a third aspect, a communication apparatus is provided. The communication apparatus may be a terminal device, a module (for example, a processor, a chip, or a chip system) used in the terminal device, or a logical node, a logical module, or software that can implement all or a part of functions of the terminal device. The communication apparatus includes: a transceiver module and a processing module. The transceiver module is configured to: receive first indication information, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, receive the first signal and the second signal; or when the first indication information indicates that the first signal is not associated with the second signal, receive the first signal. The processing module is configured to demodulate the first signal based on the first indication information.

With reference to the third aspect, in some implementations of the third aspect, when the first indication information indicates that the first signal is associated with the second signal, the first indication information further indicates a type of the second signal, and the type of the second signal includes one of a communication signal, a sensing signal, a sensing-communication signal, or a power transfer signal.

With reference to the third aspect, in some implementations of the third aspect, when the first indication information indicates that the first signal is associated with the second signal, the first indication information further indicates a relative power value between the first signal and the second signal.

With reference to the third aspect, in some implementations of the third aspect, when the first indication information indicates that the first signal is associated with the second signal, the transceiver module is further configured to: receive second indication information, where the second indication information indicates at least one of a sequence of the second signal, a frequency domain coefficient of the second signal, or a time domain position of the second signal; and the processing module is further configured to: demodulate the first signal based on the first indication information and the second indication information.

With reference to the third aspect, in some implementations of the third aspect, the second indication information is carried in radio resource control RRC layer signaling or media access control MAC layer signaling.

With reference to the third aspect, in some implementations of the third aspect, the first indication information is carried in downlink control information DCI.

According to a fourth aspect, a communication apparatus is provided. The communication apparatus may be a network device, a module (for example, a processor, a chip, or a chip system) used in the network device, or a logical node, a logical module, or software that can implement all or a part of functions of the network device. The communication apparatus includes: a processing module and a transceiver module. The processing module is configured to: send first indication information through the transceiver module, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, send the first signal and the second signal; or when the first indication information indicates that the first signal is not associated with the second signal, send the first signal.

With reference to the fourth aspect, in some implementations of the fourth aspect, the transceiver module is further configured to: when sending the first signal and the second signal, receive an echo signal of the second signal, and perform sensing based on the echo signal.

With reference to the fourth aspect, in some implementations of the fourth aspect, when the first indication information indicates that the first signal is associated with the second signal, the first indication information further indicates a type of the second signal, and the type of the second signal includes one of a communication signal, a sensing signal, a sensing-communication signal, or a power transfer signal.

With reference to the fourth aspect, in some implementations of the fourth aspect, when the first indication information indicates that the first signal is associated with the second signal, the first indication information further indicates a relative power value between the first signal and the second signal.

With reference to the fourth aspect, in some implementations of the fourth aspect, the transceiver module is further configured to: when the first indication information indicates that the first signal is associated with the second signal, send second indication information, where the second indication information indicates at least one of a sequence of the second signal, a frequency domain coefficient of the second signal, or a time domain position of the second signal.

With reference to the fourth aspect, in some implementations of the fourth aspect, the second indication information is carried in radio resource control RRC layer signaling or media access control MAC layer signaling.

With reference to the fourth aspect, in some implementations of the fourth aspect, the first indication information is carried in downlink control information DCI.

According to a fifth aspect, a communication apparatus is provided, and includes a processor. The processor is configured to perform the method according to any aspect and any possible implementation of any aspect.

The communication apparatus may also include a memory, configured to store instructions and data. The memory is coupled to the processor, and when the processor executes the instructions stored in the memory, the method described in the foregoing aspects may be implemented. The communication apparatus may also include a communication interface. The communication interface is used by the communication apparatus to communicate with another device. For example, the communication interface may be a transceiver, a circuit, a bus, a module, or another type of communication interface.

According to a sixth aspect, a communication system is provided, and includes the communication apparatus according to the third aspect and the communication apparatus according to the fourth aspect.

According to a seventh aspect, a communication apparatus is provided, and includes a processor. The processor is coupled to a memory, and the memory is configured to store instructions. When the processor invokes the instructions, the communication apparatus is enabled to perform the method according to any aspect or any possible implementation of any foregoing aspect.

According to an eighth aspect, a chip system is provided, and includes a processor configured to invoke instructions from a memory and run the instructions, so that the chip system is enabled to perform the method according to any aspect or any possible implementation of any foregoing aspect.

According to a ninth aspect, a computer-readable storage medium is provided. The computer-readable storage medium stores a computer program (which may also be referred to as code or instructions). When the computer program is run on a computer, the computer is enabled to perform the method according to any aspect or any possible implementation of any foregoing aspect.

According to a tenth aspect, a computer program product is provided. The computer program product includes a computer program (which may also be referred to as code or instructions). When the computer program is run, a computer is enabled to perform the method according to any aspect or any possible implementation of any foregoing aspect.

### BRIEF DESCRIPTION OF DRAWINGS

FIG. 1 is a diagram of different sensing modes;
FIG. 2 is a diagram of a communication scenario of integrated sensing and communication;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a diagram of a time domain position of a second signal according to an embodiment of this application;
FIG. 7 is a block diagram of a communication apparatus according to an embodiment of this application; and
FIG. 8 is a block diagram of another communication apparatus according to an embodiment of this application.

### DESCRIPTION OF EMBODIMENTS

The following describes technical solutions of this application with reference to accompanying drawings.

In an evolution process from 5G to a 5G-A technology, an integrated sensing and communication technology is considered to be one of key technologies that can extend a service capability of a mobile communication network. A core idea of this technology is to add a sensing capability to the mobile communication network, and construct a capability of detecting, tracking, and imaging a target, so that communication and sensing capabilities are integrated into one network, thereby implementing harmonious coexistence or even mutual benefit.

For a wireless communication air interface technology, in a wireless communication system, communication may be classified into different types based on different types of sending nodes and receiving nodes. Generally, sending information from a network device to a terminal device is referred to as downlink communication, and sending information from the terminal device to the network device is referred to as uplink communication. In a long term evolution (long term evolution, LTE)/long term evolution advanced (long term evolution advanced, LTE-A) communication system and a new radio (new radio, NR) system, different duplex modes may be mainly classified into a frequency division duplex (frequency division duplex, FDD) mode and a time division duplex (time division duplex, TDD) mode. For a wireless communication system working in the TDD mode, a downlink carrier and an uplink carrier of the system are carriers at a same carrier frequency. An orthogonal frequency division multiplexing access (orthogonal frequency division multiplexing access, OFDMA) manner is usually used as a multiple access manner. A main characteristic of the orthogonal frequency division multiplexing access manner is that a transmission resource is divided into mutually orthogonal time-frequency resource elements (resource element, RE), and signals sent by a transmit end are all carried on the REs to be transmitted to a receive end. As different REs are mutually orthogonal, the receive end may separately receive a signal sent on each RE.

A technical principle of sensing is different from that of communication. In communication, a transmit end modulates information on radio waves and sends a signal to a receive end, and the receive end demodulates the signal carried on the radio waves to obtain the information. By contrast, sensing needs a transmit end to send radio waves in a specific direction. When the radio waves radiate to a target surface, reflected waves are formed. In this way, a receive end receives and processes the reflected waves to obtain information such as a position, a speed, and a type of a target.

There are two types of sensing modes: mono-static sensing and bi-static sensing. The mono-static sensing is that a transmit end and a receive end of a sensing signal are a same device. In a sensing signal procedure, a sensing station needs to send the sensing signal, and needs to receive a reflected signal of the sensing signal from the target surface. Therefore, the mono-static sensing mode is also referred to as a self-sending and self-receiving mode. For bi-static sensing, a transmit end and a receive end of a sensing signal are two different devices. In a sensing signal procedure, after a sensing station A sends the sensing signal, a reflected signal of the signal from the target surface is received by a sensing station B. Therefore, the bi-static sensing mode is also referred to as an A-sending and B-receiving mode.

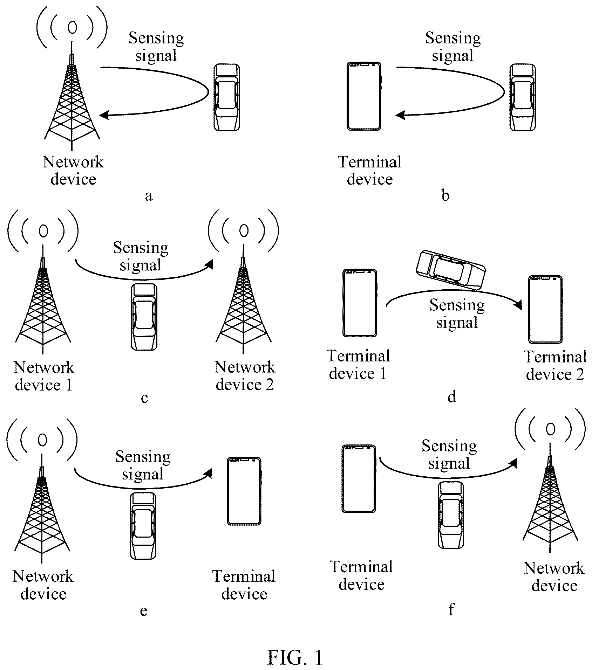

Currently, in an integrated sensing and communication scenario, from a perspective of sensing modes, the following six sub-scenarios may be included. FIG. 1 is a diagram of different sensing modes. As shown in FIG. 1, a sensed target is a vehicle. However, the sensed target in embodiments of this application is not limited to the vehicle, and may be a low-altitude unmanned aerial vehicle or a pedestrian, or may include another moving or static object. In addition, the sensed target may alternatively be a terminal device having a communication function.

As shown in a in FIG. 1, a network device needs to send a sensing signal, and also needs to receive a reflected signal of the sensing signal from a target surface. This is self-sending and self-receiving of the network device. As shown in b in FIG. 1, a terminal device needs to send a sensing signal, and also needs to receive a reflected signal of the sensing signal from a target surface. This is self-sending and self-receiving of the terminal device. As shown in c in FIG. 1, after a network device 1 sends a sensing signal, a reflected signal of the signal from a target surface is received by a network device 2. This is network device 1-sending and network device 2-receiving. As shown in d in FIG. 1, after a terminal device 1 sends a sensing signal, a reflected signal of the signal from a target surface is received by a terminal device 2. This is terminal device 1-sending and terminal device 2-receiving. As shown in e in FIG. 1, after a network device sends a sensing signal, a reflected signal of the signal from a target surface is received by a terminal device. This is network device-sending and terminal device-receiving. As shown in f in FIG. 1, after a terminal device sends a sensing signal, a reflected signal of the signal from a target surface is received by a network device. This is terminal device-sending and network device-receiving.

Embodiments of this application focus on three sub-scenarios: the network device self-sending and self-receiving, the network device 1-sending and network device 2-receiving, and the network device-sending and terminal device-receiving. In the three sub-scenarios, when the network device performs sensing, the network device also communicates with a terminal device.

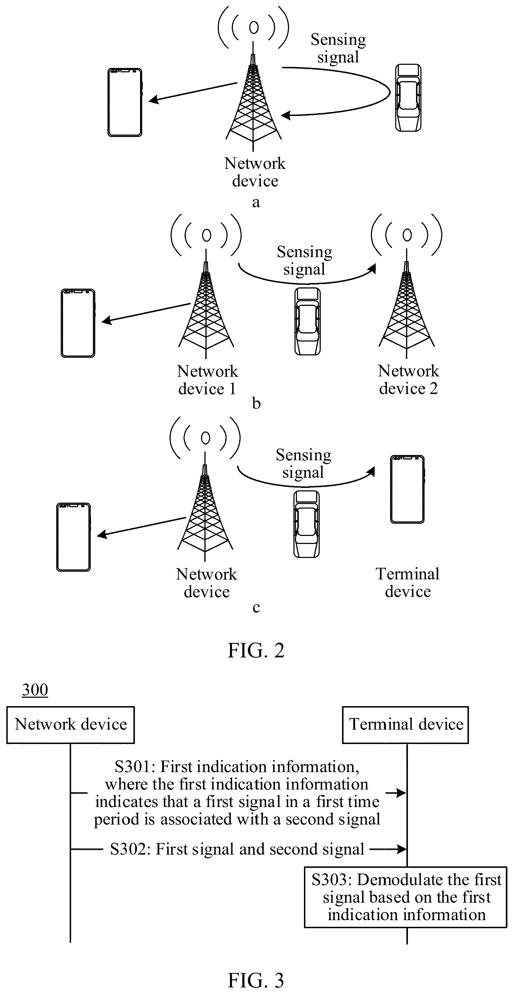

For example, FIG. 2 is a diagram of a communication scenario of integrated sensing and communication. As shown in a in FIG. 2, a network device needs to send a sensing signal, needs to receive a reflected signal of the sensing signal from a target surface, and also needs to communicate with a terminal device. As shown in b in FIG. 2, after a network device 1 sends a sensing signal, a reflected signal of the signal from a target surface is received by a network device 2, and the network device 1 also communicates with a terminal device. As shown in c in FIG. 2, after a network device sends a sensing signal, a reflected signal of the signal from a target surface is received by a terminal device 1, and the network device also communicates with a terminal device 1.

The terminal device in embodiments of this application is configured to: send an uplink signal to the network device, or receive a downlink signal from the network device. The terminal device may be a device like a mobile phone, a tablet computer, a virtual reality terminal device, an augmented reality terminal device, or a wireless terminal in industrial control, or may be a mobile object like a vehicle or an unmanned aerial vehicle having a communication function. The network device in embodiments of this application is configured to: receive the uplink signal from the terminal device, or send the downlink signal to the terminal device. The network device may be an LTE or NR network device, and may be a base station (NodeB), an evolved NodeB (eNodeB), a base station in a 5G mobile communication system, a next generation mobile communication base station (next generation NodeB, gNB), a base station in a future mobile communication system, an access node in a Wi-Fi system, or the like.

In the integrated sensing and communication scenario shown in FIG. 2, the network device may simultaneously send the sensing signal and a communication signal to the terminal device. The sensing signal is for obtaining information such as a position, a speed, and a type of the terminal device, and the communication signal is for transmitting data information or control information. The terminal device obtains the sensing signal and the communication signal, and parses the communication signal, to obtain the data information or the control information transmitted by the communication signal.

However, the integrated sensing and communication technology has the following technical problem: Communication efficiency of the communication signal is low.

In view of this, embodiments of this application provide a communication method and a communication apparatus. A network device notifies, based on first indication information, a terminal device that a first signal has an associated second signal. The terminal device can determine, based on the first indication information, that the second signal causes interference to demodulation on the first signal. Therefore, during the demodulation on the first signal, the interference from the second signal can be eliminated, thereby improving communication efficiency of the first signal.

For ease of understanding the method provided in embodiments of this application, the following descriptions are first provided.

First, in embodiments of this application, "indicate" may include "directly indicate and "indirectly indicate", or may include "explicitly indicate" and "implicitly indicate". Information indicated by a piece of information is referred to as to-be-indicated information. In a specific implementation process, the to-be-indicated information may be indicated in a plurality of manners, for example, but not limited to, the to-be-indicated information may be directly indicated, for example, by using the to-be-indicated information or an index of the to-be-indicated information. Alternatively, the to-be-indicated information may be indirectly indicated by indicating other information, and an association relationship exists between the other information and the to-be-indicated information. Alternatively, only a part of the to-be-indicated information may be indicated, and another part of the to-be-indicated information is known or pre-agreed on. For example, the to-be-indicated information may also be indicated by a pre-agreement (for example, a protocol specification) on whether an information element exists, so that indication overheads are reduced to some extent.

Second, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single or may be plural.

Third, in embodiments of this application, descriptions such as "when ...", "in a case of ...", and "if" all mean that a device (for example, a terminal device or an access network device described below) may perform corresponding processing in a specific objective situation, and are not intended to limit time. In addition, the device (for example, the terminal device or the access network device described below) is not required to necessarily perform a determining action during implementation. This does not mean that there is another limitation.

Fourth, in embodiments of this application, "predefinition" may be a protocol definition. The "predefinition" may be implemented by pre-storing, in a device (for example, including a terminal device and a network device), corresponding code, a corresponding table, or another corresponding manner that can indicate related information. A specific implementation of the "predefinition" is not limited in this application.

Fifth, a "protocol" in embodiments of this application may be a standard protocol in the communication field, for example, may include a long term evolution (long term evolution, LTE) protocol, an NR protocol, and a related protocol applied to a future communication system. This is not limited in this application.

For better understanding of embodiments of this application, the following describes in detail a communication method provided in embodiments of this application.

FIG. 3 is a schematic flowchart of a communication method 300 according to an embodiment of this application. The method 300 may be applied to the integrated sensing and communication scenario shown in FIG. 2. As shown in FIG. 3, the method 300 may include the following steps.

S301: A network device sends first indication information to a terminal device, and correspondingly, the terminal device receives the first indication information. The first indication information indicates that a first signal in a first time period is associated with a second signal, the first signal is used for communication, and the second signal is used for one or more of communication, sensing, or power transfer.

The first signal is used for communication, in other words, the first signal may include control information or data information. The first signal may also be referred to as a communication signal, which is not limited in embodiments of this application. The second signal is used for one or more of communication, sensing, or power transfer. If the second signal is used for sensing, in other words, the second signal is used for obtaining information such as a position, a speed, and a type of the terminal device, the second signal may also be referred to as a sensing signal, which is not limited in embodiments of this application.

The first indication information indicates that the first signal in the first time period is associated with the second signal. In other words, an association exists between the first signal in the first time period and the second signal. If the association exists between the first signal and the second signal, it indicates that the terminal device is in the integrated sensing and communication scenario. The first signal in the first time period indicates that the first signal is sent or received in the first time period. The first time period indicates one piece of duration. For example, the first time period may be one slot, one mini-slot, or a time period formed by a plurality of symbols. A length of the first time period is not specifically limited in embodiments of this application.

S302: The network device sends the first signal and the second signal to the terminal device, and correspondingly, the terminal device receives the first signal and the second signal.

The network device may send the first signal and the second signal to the terminal device. Sending time of the first signal and the second signal may both be within the first time period. However, this is not limited in embodiments of this application. Channels used by the network device to send the first signal and the second signal may be the same or may be different. This is not limited in embodiments of this application.

S303: The terminal device demodulates the first signal based on the first indication information.

The terminal device receives the first indication information, and may determine that the association exists between the first signal and the second signal. The association exists between the first signal and the second signal. When demodulation is performed on the first signal, the second signal causes interference to the demodulation. After receiving the first signal and the second signal, the terminal device may eliminate, based on the first indication information, the interference from the second signal as much as possible when demodulating the first signal.

In a scenario in which the network device performs self-sending and self-receiving, the network device may receive an echo signal of the second signal, and perform sensing based on the echo signal. The echo signal represents a reflected signal of the second signal from a surface of the terminal device. In a scenario of network device-sending and another device-receiving, another network device or another terminal device may receive the echo signal of the second signal, and perform sensing based on the echo signal.

In the communication method provided in embodiments of this application, the network device notifies, based on the first indication information, the terminal device that the first signal has the associated second signal. The terminal device can determine, based on the first indication information, that the second signal causes interference to demodulation on the first signal. Therefore, during the demodulation on the first signal, the interference from the second signal can be eliminated, thereby improving communication efficiency of the first signal.

In the integrated sensing and communication scenario, the first indication information may indicate that the first signal in the first time period is associated with the second signal. In a communication scenario, the first indication information may indicate that the first signal in the first time period is not associated with the second signal.

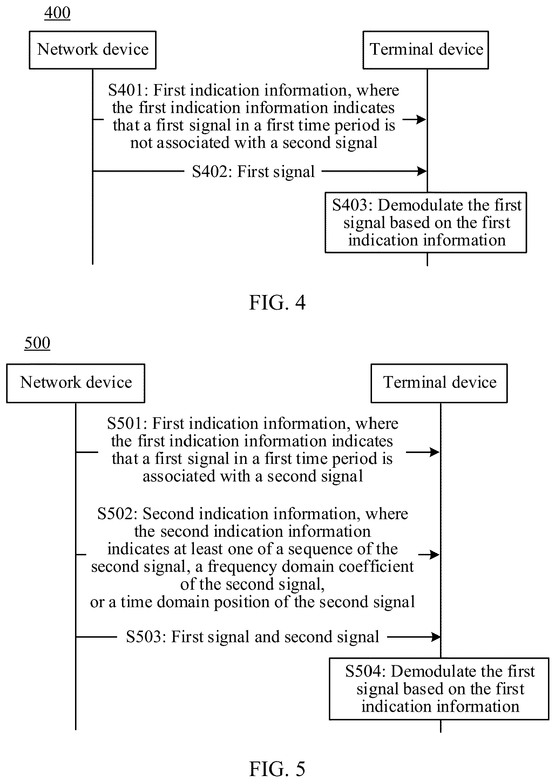

For example, FIG. 4 is a schematic flowchart of another communication method 400 according to an embodiment of this application. As shown in FIG. 4, the method 400 may include the following steps.

S401: A network device sends first indication information to a terminal device, and correspondingly, the terminal device receives the first indication information. The first indication information indicates that a first signal in a first time period is not associated with a second signal, the first signal is used for communication, and the second signal is used for one or more of communication, sensing, or power transfer.

The first indication information indicates that the first signal in the first time period is not associated with the second signal. In other words, the first signal in the first time period has no associated second signal. If no association exists between the first signal and the second signal, it indicates that the second signal does not cause interference to the first signal. In other words, the network device does not send the second signal for sensing, and the second signal does not cause interference to the first signal.

S402: The network device sends the first signal to the terminal device, and correspondingly, the terminal device receives the first signal.

The network device may send the first signal to the terminal device within the first time period.

For example, the network device may send the first signal to the terminal device within the first time period through a physical downlink shared channel (physical downlink shared channel, PDSCH).

S403: The terminal device demodulates the first signal based on the first indication information.

The terminal device receives the first indication information, and may determine that the first signal has no associated second signal. When demodulating the first signal, the terminal device may not consider interference caused by the second signal to the demodulation.

In the communication method provided in embodiments of this application, the network device notifies, based on the first indication information, the terminal device that the first signal has no associated second signal. The terminal device can determine, based on the first indication information, that the second signal does not cause interference to demodulation on the first signal. Therefore, during the demodulation on the first signal, the interference from the second signal may not be considered, thereby improving demodulation efficiency of the first signal.

The first indication information may indicate that the first signal in the first time period is associated with the second signal, or may indicate that the first signal in the first time period is not associated with the second signal. The terminal device may determine a demodulation manner for the first signal based on the first indication information, thereby increasing flexibility.

For example, the first indication information may include a field, and the field indicates whether the first signal in the first time period is associated with the second signal. For example, the field may be one bit. When the bit is 0, it indicates that the first signal in the first time period is not associated with the second signal; or when the bit is 1, it indicates that the first signal in the first time period is associated with the second signal. Alternatively, when the bit is 1, it indicates that the first signal in the first time period is not associated with the second signal; or when the bit is 0, it indicates that the first signal in the first time period is associated with the second signal.

Table 1 shows an example of one-bit indication information.

**Table 1**

| Bit value | Meaning |
|---|---|
| 0 | A first signal is not associated with a second signal |
| 1 | A first signal is associated with a second signal |

As shown in Table 1, when the bit is 0, it indicates that the first signal in the first time period is not associated with the second signal; or when the bit is 1, it indicates that the first signal in the first time period is associated with the second signal.

In an optional embodiment, when the first indication information indicates that the first signal is associated with the second signal, the first indication information further indicates a type of the second signal.

The type of the second signal may be a sensing signal, or may be a communication signal, or may be a sensing-communication signal (namely, a signal used for both communication and sensing), or another signal with a function other than communication and sensing, for example, a power transfer signal (namely, a signal used for energy transfer). When the type of the second signal is a communication signal, the second signal may be a data signal, a control signal, or a reference signal.

For example, the first indication information may include a field, and the field indicates whether the first signal in the first time period is associated with the second signal, and whether the second signal is a communication signal or a sensing signal. For example, the field may be two bits, and the two bits indicate whether the first signal in the first time period is associated with the second signal, and whether the second signal is a communication signal or a sensing signal. Table 2 shows an example of two-bit indication information.

**Table 2**

| Bit value | Meaning |
|---|---|
| 00 | A first signal is not associated with a second signal |
| 01 | A first signal is associated with a second signal, and the second signal is a sensing signal |
| 10 | A first signal is associated with a second signal, and the second signal is a communication signal |
| 11 | Reserved |

As shown in Table 2, when values of the two bits are 00, it indicates that the first signal is not associated with the second signal; when the values of the two bits are 01, it indicates that the first signal is associated with the second signal, and the second signal is a sensing signal; when the values of the two bits are 10, the first signal is associated with the second signal, and the second signal is a communication signal; or when the values of the two bits are 11, it indicates a reserved state.

For example, the first indication information may include a field, and the field indicates whether the first signal in the first time period is associated with the second signal, and whether the second signal is one of a communication signal, a sensing signal, or a sensing-communication signal. For example, the field may be two bits, and the two bits indicate whether the first signal in the first time period is associated with the second signal, and whether the second signal is one of a communication signal, a sensing signal, or a sensing-communication signal. Table 3 shows an example of two-bit indication information.

**Table 3**

| Bit value | Meaning |
|---|---|
| 00 | A first signal is not associated with a second signal |
| 01 | A first signal is associated with a second signal, and the second signal is a sensing signal |
| 10 | A first signal is associated with a second signal, and the second signal is a communication signal |
| 11 | A first signal is associated with a second signal, and the second signal is a sensing-communication signal |

As shown in Table 3, when values of the two bits are 00, it indicates that the first signal is not associated with the second signal; when the values of the two bits are 01, it indicates that the first signal is associated with the second signal, and the second signal is a sensing signal; when the values of the two bits are 10, the first signal is associated with the second signal, and the second signal is a communication signal; or when the values of the two bits are 11, it indicates that the first signal is associated with the second signal, and the second signal is a sensing-communication signal.

For example, the first indication information may include a field, and the field indicates whether the first signal in the first time period is associated with the second signal, and whether the second signal is one of a communication signal, a sensing signal, or a power transfer signal. For example, the field may be two bits, and the two bits indicate whether the first signal in the first time period is associated with the second signal, and whether the second signal is one of a communication signal, a sensing signal, or a power transfer signal. Table 4 shows an example of two-bit indication information.

**Table 4**

| Bit value | Meaning |
|---|---|
| 00 | A first signal is not associated with a second signal |
| 01 | A first signal is associated with a second signal, and the second signal is a sensing signal |
| 10 | A first signal is associated with a second signal, and the second signal is a communication signal |
| 11 | A first signal is associated with a second signal, and the second signal is a power transfer signal |

As shown in Table 4, when values of the two bits are 00, it indicates that the first signal is not associated with the second signal; when the values of the two bits are 01, it indicates that the first signal is associated with the second signal, and the second signal is a sensing signal; when the values of the two bits are 10, the first signal is associated with the second signal, and the second signal is a communication signal; or when the values of the two bits are 11, it indicates that the first signal is associated with the second signal, and the second signal is a power transfer signal.

It should be noted that, when the first indication information indicates the type of the second signal, the first indication information is not limited to directly indicating a function of the second signal, such as sensing, communication, or power transfer, and may implicitly indicate a type index of the second signal, such as a first type, a second type, or a third type. The first type may indicate that the type of the second signal is a sensing signal, the second type may indicate that the type of the second signal is a communication signal, and the third type may indicate that the type of the second signal is a power transfer signal.

When the first indication information indicates that the first signal is associated with the second signal, the network device indicates the type of the second signal to the terminal device through the first indication information, so that the terminal device can determine a type feature of the second signal based on the first indication information, to select an appropriate receiving method to eliminate the interference from the second signal to the first signal, thereby improving receiving performance of the first signal.

In an optional embodiment, when the first indication information indicates that the first signal is associated with the second signal, the first indication information further indicates a relative power value between the first signal and the second signal.

The relative power value between the first signal and the second signal indicates a power difference between first power and second power in a direction in which the network device sends the second signal to the terminal device. A relative power value may be positive, may be negative, or may be zero. This is not limited in embodiments of this application. A unit of the relative power value may be decibel (dB), but this is not limited in embodiments of this application.

For example, the relative power value between the first signal and the second signal may be 10 dB, indicating that in the direction in which the network device sends the second signal to the terminal device, power of the second signal sent by the network device is 10 dB higher than power of the first signal sent by the network device.

To better understand the relative power value between the first signal and the second signal provided in embodiments of this application, the relative power value is described by using an example.

It is assumed that the power of the first signal sent by the network device is P1; the power of the second signal sent by the network device is P2; a maximum antenna gain of the first signal sent by the network device is G1; a maximum antenna gain of the second signal sent by the network device is G2; and as the first signal sent by the network device leaks to a beam direction of the second signal, a gain value of a beam, used by the network device to send the first signal, in a direction of the maximum antenna gain of the second signal is denoted as G3. In this case, a difference between the power of the second signal and the power of the first signal is P2+G2-P1-G3. If a linear value is used as a unit, the difference between the power of the second signal and the power of the first signal may also be represented as a power ratio, that is, P2*G2/P1/G3.

That the first indication information indicates the relative power value between the first signal and the second signal includes a plurality of possible implementations.

In a possible implementation, the first indication information may include one value, and the value is the relative power value between the first signal and the second signal. This implementation is simple and direct. The terminal device may directly obtain the relative power value between the first signal and the second signal from the first indication information.

In another possible implementation, the first indication information may include a plurality of relative power values, and one of the plurality of relative power values is the relative power value between the first signal and the second signal. In this case, the network device may also send another piece of indication information to the terminal device, and the indication information indicates an index value of the relative power value between the first signal and the second signal in the foregoing plurality of relative power values. Alternatively, the network device sends another piece of indication information to the terminal device, and the indication information indicates a plurality of relative power values of the first signal and the second signal. The network device sends the first indication information to the terminal device, and the first indication information indicates the index value of the relative power value between the first signal and the second signal in the foregoing plurality of relative power values. The plurality of relative power values may be referred to as candidate values of the relative power value. This is not limited in embodiments of this application.

For example, a piece of indication information indicates a plurality of relative power values, for example, 10 dB, 15 dB, and 20 dB, and the first indication information indicates the index value of the relative power value between the first signal and the second signal in the plurality of relative power values. In an example, the first indication information includes a field, and the field indicates the index value of the relative power value between the first signal and the second signal in the plurality of relative power values. For example, the field may be two bits, and a correspondence between values of the two bits and the relative power value may be shown in Table 5.

**Table 5**

| Bit value | Meaning |
|---|---|
| 00 | 10 dB |
| 01 | 15 dB |
| 10 | 20 dB |
| 11 | Reserved |

As shown in Table 2, when the values of the two bits are 00, it indicates that the relative power value is 10 dB; when the values of the two bits are 01, it indicates that the relative power value is 15 dB; when the values of the two bits are 10, it indicates that the relative power value is 20 dB; or when the values of the two bits are 11, it indicates that the two bits are in a reserved state.

In this implementation, two pieces of indication information indirectly indicate the relative power value between the first signal and the second signal. Compared with direct indication, the indirect indication improves security of information transmission.

It may be understood that the foregoing first indication information may also indicate whether the first signal in the first time period is associated with the second signal. In an example, the first indication information may include a field, and the field indicates whether the first signal in the first time period is associated with the second signal, and also indicates the index value of the relative power value between the first signal and the second signal in the plurality of relative power values. For example, the field is two bits, and the two bits indicate whether the first signal in the first time period is associated with the second signal, and also indicate the index value of the relative power value between the first signal and the second signal in the plurality of relative power values. Table 6 shows an example of two-bit indication information.

**Table 6**

| Bit value | Meaning |
|---|---|
| 00 | A first signal is not associated with a second signal |
| 01 | A first signal is associated with a second signal, and 10 dB |
| 10 | A first signal is associated with a second signal, and 15 dB |
| 11 | A first signal is associated with a second signal, and 20 dB |

As shown in Table 6, when values of the two bits are 00, it indicates that the first signal is not associated with the second signal; when the values of the two bits are 01, it indicates that the first signal is associated with the second signal, and the relative power value between the first signal and the second signal is 10 dB; when the values of the two bits are 10, it indicates that the first signal is associated with the second signal, and the relative power value between the first signal and the second signal is 15 dB; or when the values of the two bits are 11, it indicates that the first signal is associated with the second signal, and the relative power value between the first signal and the second signal is 20 dB.

To better eliminate interference from the second signal when the terminal device demodulates the first signal, the network device may further send a feature parameter of the second signal to the terminal device, for example, a sequence of the second signal, a frequency domain coefficient of the second signal, and a time domain position of the second signal.

For example, FIG. 5 is a schematic flowchart of a communication method 500 according to an embodiment of this application. The method 500 may be applied to the integrated sensing and communication scenario shown in FIG. 2. As shown in FIG. 5, the method 500 may include the following steps.

S501: A network device sends first indication information to a terminal device, and correspondingly, the terminal device receives the first indication information. The first indication information indicates that a first signal in a first time period is associated with a second signal, the first signal is used for communication, and the second signal is used for one or more of communication, sensing, or power transfer.

S502: The network device sends second indication information to the terminal device, and correspondingly, the terminal device receives the second indication information. The second indication information indicates at least one of a sequence of the second signal, a frequency domain coefficient of the second signal, or a time domain position of the second signal.

When the first indication information indicates that the first signal is associated with the second signal, the terminal device needs to consider eliminating interference from the second signal when demodulating the first signal. The network device may indicate a feature parameter of the second signal to the terminal device through the second indication information, for example, at least one of the sequence of the second signal, the frequency domain coefficient of the second signal, or the time domain position of the second signal, so that the terminal device eliminates, based on such information, the interference from the second signal when demodulating the first signal.

The second indication information indicates at least one of the sequence of the second signal, the frequency domain coefficient of the second signal, or the time domain position of the second signal. In this case, in an example, the second indication information may indicate the sequence of the second signal, the frequency domain coefficient of the second signal, or the time domain position of the second signal; in another example, the second indication information may indicate two of the sequence of the second signal, the frequency domain coefficient of the second signal, or the time domain position of the second signal; or in still another example, the second indication information may indicate the sequence of the second signal, the frequency domain coefficient of the second signal, and the time domain position of the second signal. It may be understood that a larger quantity of feature parameters that are of the second signal and that are indicated by the second indication information is more helpful for the terminal device to eliminate the interference from the second signal when the terminal device demodulates the first signal.

S503: The network device sends the first signal and the second signal to the terminal device, and correspondingly, the terminal device receives the first signal and the second signal.

S504: The terminal device demodulates the first signal based on the first indication information and the second indication information.

The terminal device may determine, based on the first indication information, that the first signal has the associated second signal; and may determine, based on the second indication information, at least one of the sequence of the second signal, the frequency domain coefficient of the second signal, or the time domain position of the second signal. When demodulating the first signal, the terminal device may eliminate, based on the at least one of the sequence of the second signal, the frequency domain coefficient of the second signal, or the time domain position of the second signal, the interference caused by the second signal.

In this implementation, the network device notifies at least one of the sequence of the second signal, the frequency domain coefficient of the second signal, or the time domain position of the second signal to the terminal device through the second indication information. This helps the terminal device better eliminate the interference caused by the second signal when the terminal device demodulates the first signal.

To better understand the feature parameter of the second signal, the following describes the feature parameter in detail.

### 1. Sequence of the second signal

The sequence of the second signal may include N symbols, where N is an integer greater than 1. Each of the N symbols may be represented as a complex number, that is, x+j*y, where x is a real part, and y is an imaginary part. Generally, a value of N is large. For example, the value of N may reach several hundreds orders of magnitude. If the second indication information directly indicates values of the N symbols included in the sequence of the first signal, a quantity of information bits needed by the second indication information is large, and overheads are excessively high. Therefore, the network device and the terminal device may pre-determine a candidate sequence set of the sequence of the first signal. The candidate set may be several specific sequences, or may be several input parameters for generating the sequence of the first signal, for example, initialization seed values. The network device may indicate an index of the sequence of the first signal in the candidate sequence set through the second indication information, or indicate an index of the input parameters for generating the sequence of the first signal in the candidate sequence set. The terminal device may determine the sequence of the first signal based on the second indication information and the candidate sequence set.

In a possible implementation, the network device and the terminal device may pre-determine the candidate sequence set of the sequence of the first signal, and the candidate set includes the several specific sequences. The second indication information may indicate the index of the sequence of the first signal in the candidate sequence set. For example, the candidate sequence set includes 10 sequences numbered from #0 to #9. The second indication information may indicate a value in #0 to #9, for example, #5, which indicates that the sequence of the first signal is a sequence numbered #5 in the candidate sequence set.

In another possible implementation, the network device and the terminal device may pre-determine the candidate sequence set of the sequence of the first signal, and the candidate set includes the several initialization seed values for generating the sequence of the first signal. The second indication information may indicate an index of an initialization seed value that is for generating the sequence of the first signal and that is in the candidate sequence set. For example, the candidate sequence set includes 10 initialization seed values numbered from 0 to 9. The second indication information may indicate a value in 0 to 9, for example, 5, which indicates that an initialization seed for generating the sequence of the first signal is an initialization seed value numbered 5 in the candidate sequence set.

If the candidate sequence set of the sequence of the first signal is not preset on the network device and the terminal device, the network device may indicate, through the second indication information, an initialization seed value for generating the sequence of the first signal. For example, the initialization seed value may be 100 or 1000. The terminal device may obtain the initialization seed value based on the second indication information, and generate the sequence of the first signal based on the initialization seed value. In this implementation, the quantity of information bits needed by the second indication information is small, and the implementation is simple and convenient.

### 2. Frequency domain coefficient of the second signal

The frequency domain coefficient of the second signal may be used to preprocess a sequence of the second signal. In this case, the frequency domain coefficient of the second signal may also be referred to as a preprocessing coefficient of the second signal. This is not limited in embodiments of this application.

The frequency domain coefficient of the second signal may include M coefficients, and the sequence of the second signal may include N symbols, where M may be equal to N. Any one of the M coefficients may be a real number, or may be a complex number. This is not limited in embodiments of this application.

An m^{th} coefficient in the M coefficients may be denoted as a[m], an m^{th} symbol in the N symbols may be denoted as x[m], and a method for preprocessing the sequence of the second signal by using the frequency domain coefficient of the second signal may be y[m]=a[m]*x[m], where y[m] is an m^{th} symbol in a preprocessed second signal. In an example, x[m] and y[m] may each be represented as a complex number, including a real part and an imaginary part.

The second indication information indicates the frequency domain coefficient of the second signal. In an example, the second indication information may indicate the M coefficients included in the frequency domain coefficient of the second signal. In another example, if there is a special rule for the M coefficients included in the frequency domain coefficient of the second signal, the second indication information may indicate L coefficients included in the frequency domain coefficient of the second signal, where L is smaller than M.

For example, the M coefficients included in the frequency domain coefficient of the second signal satisfy the following: For a predetermined positive integer k, k<M; for all coefficients of which indexes are smaller than k: a[1], a[2], ..., a[k-1], a[i]<a[i+1], where i<k; and for all coefficients of which indexes are greater than k: a[k+1], a[k+2], ..., a[M], a[i]>a[i+1], where i>k. Alternatively, the M coefficients included in the frequency domain coefficient of the second signal satisfy the following: For the predetermined positive integer k, k<M; for all the coefficients of which the indexes are smaller than k: a[1], a[2], ..., a[k-1], a[i]>a[i+1], where i<k; and for all the coefficients of which the indexes are greater than k: a[k+1], a[k+2], ..., a[M], a[i]<a[i+1], where i>k. Under this special rule, the second indication information may indicate a k^{th} coefficient in the frequency domain coefficient of the second signal.

For example, a value of M is 12, and the M coefficients may be {0.3, 0.35, 0.4, 0.45, 0.5, 0.6, 0.6, 0.5, 0.45, 0.4, 0.35, 0.3}, or {0.6, 0.5, 0.45, 0.4, 0.35, 0.3, 0.3, 0.35, 0.4, 0.45, 0.5, 0.6}. Under this special rule, the second indication information may indicate a 6^{th} coefficient and a 7^{th} coefficient (that is, 0.6 or 0.3) in the frequency domain coefficient of the second signal. For another example, the value of M is 24, and the M coefficients may be {0.9, 0.8, 0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75, 0.8, 0.9}, or {0.9, 0.8, 0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75, 0.8, 0.9}. Under this special rule, the second indication information may indicate a 12^{th} coefficient and a 7^{th} coefficient (that is, 0.9 or 0.3) in the frequency domain coefficient of the second signal.

### 3. Time domain position of the second signal

The time domain position of the second signal is a position of a symbol occupied by the second signal in a slot, in other words, a position of a symbol carrying the second signal in a time period, and the time period may be one or more slots. The second signal may occupy one or more symbols in a slot. This is not limited in embodiments of this application.

The second indication information indicates the time domain position of the second signal. In an example, the first indication information may indicate a number of the symbol occupied by the second signal in the slot.

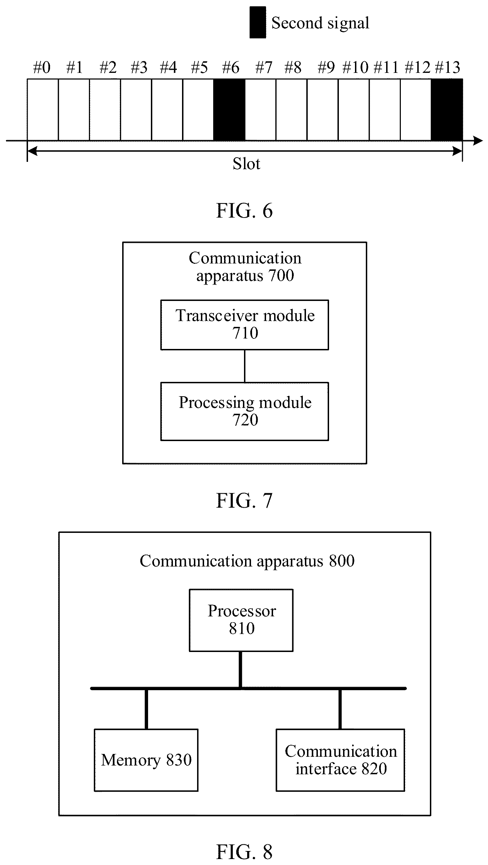

For example, FIG. 6 is a diagram of the time domain position of the second signal. As shown in FIG. 6, in 5G NR, one slot may include 14 symbols, the 14 symbols are numbered from #0 to #13, and symbols occupied by the second signal are numbered #6 and #13. In this case, the second indication information may indicate that the time domain position of the second signal is the symbol numbered #6 and the symbol numbered #13 in one slot. The terminal device may determine, based on the second indication information, that the second signal is carried in the symbol numbered #6 and the symbol numbered #13 in one slot.

In an optional embodiment, the foregoing first indication information may be carried in DCI.

In an optional embodiment, the foregoing second indication information may be carried in RRC layer signaling or MAC layer signaling.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Sequence numbers of the foregoing processes do not mean execution sequences. The execution sequence of the processes should be determined based on functions and internal logic of the processes, and should not be construed as any limitation on implementation processes of embodiments of this application.

The foregoing describes in detail the methods in embodiments of this application with reference to FIG. 1 to FIG. 6. The following describes in detail apparatuses in embodiments of this application with reference to FIG. 7 and FIG. 8.

FIG. 7 is a block diagram of a communication apparatus 700 according to an embodiment of this application. As shown in FIG. 7, the communication apparatus 700 may include: a transceiver module 710 and a processing module 720.

In a possible implementation, the communication apparatus 700 may perform the steps performed by the terminal device in the foregoing embodiments.

The transceiver module 710 is configured to: receive first indication information, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, receive the first signal and the second signal; or when the first indication information indicates that the first signal is not associated with the second signal, receive the first signal. The processing module 720 is configured to: demodulate the first signal based on the first indication information.

In another possible implementation, the communication apparatus 700 may perform the steps performed by the network device in the foregoing embodiments.

The processing module 720 is configured to: send first indication information through the transceiver module 710, where the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, send the first signal and the second signal; or when the first indication information indicates that the first signal is not associated with the second signal, send the first signal.

It should be understood that the communication apparatus 700 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another suitable component that supports the described function. In an optional example, a person skilled in the art may understand that the communication apparatus 700 may be specifically the terminal device or the network device in the foregoing embodiments, and the communication apparatus 700 may be configured to perform procedures and/or steps corresponding to the terminal device or the network device in the foregoing method embodiments. To avoid repetition, details are not described herein again.

The communication apparatus 700 in each of the foregoing solutions has functions of implementing corresponding steps performed by the terminal device or the network device in the foregoing methods. The foregoing functions may be implemented by hardware, or may be implemented by hardware by executing corresponding software. The hardware or the software includes one or more modules corresponding to the foregoing functions.

In embodiments of this application, the communication apparatus 700 in FIG. 7 may alternatively be a chip or a chip system, for example, a system-on-a-chip (system-on-a-chip, SoC).

FIG. 8 is a block diagram of another communication apparatus 800 according to an embodiment of this application. As shown in FIG. 8, the communication apparatus 800 includes a processor 810, a communication interface 820, and a memory 830. The processor 810, the communication interface 820, and the memory 830 communicate with each other through an internal connection path. The memory 830 is configured to store instructions. The communication interface 820 has an input/output function or a transceiver function, and is configured to communicate with another device through a transmission medium, so that the communication apparatus 800 can communicate with the another device. The processor 810 is configured to execute the instructions stored in the memory 830, to control the communication interface 820 to send a signal and/or receive a signal.

It should be understood that the communication apparatus 800 may be specifically the terminal device or the network device in the foregoing embodiments, and may be configured to perform steps and/or procedures corresponding to the terminal device or the network device in the foregoing method embodiments. Optionally, the memory 830 may include a read-only memory and a random access memory, and provide instructions and data for the processor. A part of the memory may further include a non-volatile random access memory. For example, the memory may further store information about a device type. The processor 810 may be configured to execute the instructions stored in the memory, and when the processor 810 executes the instructions stored in the memory, the processor 810 is configured to perform the steps and/or procedures in the foregoing method embodiments corresponding to the terminal device or the network device. The communication interface 820 may include a transmitter and a receiver. The transmitter may be configured to perform the steps and/or procedures that correspond to the communication interface 820 and that are for performing a sending action. The receiver may be configured to perform the steps and/or procedures that correspond to the communication interface 820 and that are for performing a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be completed by using a hardware integrated logical circuit in the processor, or by using instructions in a form of software. The steps of the methods disclosed with reference to embodiments of this application may be directly completed and performed by a hardware processor, or may be completed and performed by a combination of hardware and software units in the processor. The software unit may be located in a mature storage medium in the art, such as a random access memory, a flash memory, a read-only memory, a programmable read-only memory, an electrically erasable programmable memory, a register, or the like. The storage medium is located in the memory, and the processor reads instructions in the memory and completes the steps in the foregoing methods in combination with hardware of the processor. To avoid repetition, details are not described herein again.

An embodiment of this application further provides a communication system. The communication system may include the terminal device and the network device in the foregoing embodiments.

An embodiment of this application provides a computer-readable storage medium. The computer-readable storage medium is configured to store a computer program. The computer program is for implementing the method corresponding to the terminal device shown in various possible implementations in the foregoing embodiments.

An embodiment of this application provides another computer-readable storage medium. The computer-readable storage medium is configured to store a computer program. The computer program is for implementing the method corresponding to the network device shown in various possible implementations in the foregoing embodiments.

An embodiment of this application provides a computer program product. The computer program product includes a computer program (which may also be referred to as code or instructions). When the computer program is run on a computer, the computer may perform the method corresponding to the terminal device shown in the foregoing embodiments.

An embodiment of this application provides another computer program product. The computer program product includes a computer program (which may also be referred to as code or instructions). When the computer program is run on a computer, the computer may perform the method corresponding to the network device shown in various possible implementations in the foregoing embodiments.

An embodiment of this application provides a chip system. The chip system is configured to support the foregoing terminal device in implementing the functions shown in embodiments of this application.

An embodiment of this application provides another chip system. The chip system is configured to support the foregoing network device in implementing the functions shown in embodiments of this application.

A person of ordinary skill in the art may be aware that, in combination with the various examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside of the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In several embodiments provided in this application, it should be understood that the disclosed system, apparatuses, and methods may be implemented in other manners. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, various functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a receiver, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device and comprising:
receiving first indication information, wherein the first indication information indicates that a first signal in a first time period is associated with a second signal or is not associated with the second signal, the first signal is used for communication, and the second signal is used for one or more of communication, sensing, or power transfer;
when the first indication information indicates that the first signal is associated with the second signal, receiving the first signal and the second signal, or when the first indication information indicates that the first signal is not associated with the second signal, receiving the first signal; and
demodulating the first signal based on the first indication information.

2. The method according to claim 1, wherein when the first indication information indicates that the first signal is associated with the second signal, the first indication information further indicates a type of the second signal, and the type of the second signal comprises one of a communication signal, a sensing signal, a sensing-communication signal, or a power transfer signal.

3. The method according to claim 1 or 2, wherein when the first indication information indicates that the first signal is associated with the second signal, the first indication information further indicates a relative power value between the first signal and the second signal.

4. The method according to any one of claims 1 to 3, wherein when the first indication information indicates that the first signal is associated with the second signal, the method further comprises:
receiving second indication information, wherein the second indication information indicates at least one of a sequence of the second signal, a frequency domain coefficient of the second signal, or a time domain position of the second signal; and
the demodulating the first signal based on the first indication information comprises:
demodulating the first signal based on the first indication information and the second indication information.

5. The method according to any one of claims 1 to 4, wherein the first indication information is carried in downlink control information DCI.

6. A communication method, applied to a network device and comprising:
sending first indication information, wherein the first indication information indicates that a first signal in a first time period is associated with a second signal or is not associated with the second signal, the first signal is used for communication, and the second signal is used for one or more of communication, sensing, or power transfer; and
when the first indication information indicates that the first signal is associated with the second signal, sending the first signal and the second signal; or
when the first indication information indicates that the first signal is not associated with the second signal, sending the first signal.

7. The method according to claim 6, wherein the method further comprises:
when sending the first signal and the second signal, receiving an echo signal of the second signal, and performing sensing based on the echo signal.

8. The method according to claim 6 or 7, wherein when the first indication information indicates that the first signal is associated with the second signal, the first indication information further indicates a type of the second signal, and the type of the second signal comprises one of a communication signal, a sensing signal, a sensing-communication signal, or a power transfer signal.

9. The method according to any one of claims 6 to 8, wherein when the first indication information indicates that the first signal is associated with the second signal, the first indication information further indicates a relative power value between the first signal and the second signal.

10. The method according to any one of claims 6 to 9, wherein the method further comprises:
when the first indication information indicates that the first signal is associated with the second signal, sending second indication information, wherein the second indication information indicates at least one of a sequence of the second signal, a frequency domain coefficient of the second signal, or a time domain position of the second signal.

11. The method according to any one of claims 6 to 10, wherein the first indication information is carried in downlink control information DCI.

12. A communication apparatus, comprising:
a transceiver module, configured to: receive first indication information, wherein the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, receive the first signal and the second signal; or when the first indication information indicates that the first signal is not associated with the second signal, receive the first signal; and
a processing module, configured to demodulate the first signal based on the first indication information.

13. The apparatus according to claim 12, wherein when the first indication information indicates that the first signal is associated with the second signal, the first indication information further indicates a type of the second signal, and the type of the second signal comprises one of a communication signal, a sensing signal, a sensing-communication signal, or a power transfer signal.

14. The apparatus according to claim 12 or 13, wherein when the first indication information indicates that the first signal is associated with the second signal, the first indication information further indicates a relative power value between the first signal and the second signal.

15. The apparatus according to any one of claims 12 to 14, wherein when the first indication information indicates that the first signal is associated with the second signal, the transceiver module is further configured to:
receive second indication information, wherein the second indication information indicates at least one of a sequence of the second signal, a frequency domain coefficient of the second signal, or a time domain position of the second signal; and
the processing module is further configured to:
demodulate the first signal based on the first indication information and the second indication information.

16. The apparatus according to any one of claims 12 to 15, wherein the first indication information is carried in downlink control information DCI.

17. A communication apparatus, comprising:
a processing module, configured to: send first indication information through a transceiver module, wherein the first indication information indicates that a first signal in a first time period is associated with a second signal or is not associated with the second signal, the first signal is used for communication, and the second signal is used for one or more of communication, sensing, or power transfer; and when the first indication information indicates that the first signal is associated with the second signal, send the first signal and the second signal; or when the first indication information indicates that the first signal is not associated with the second signal, send the first signal.

18. The apparatus according to claim 17, wherein the transceiver module is further configured to:
when sending the first signal and the second signal, receive an echo signal of the second signal, and perform sensing based on the echo signal.

19. The apparatus according to claim 17 or 18, wherein when the first indication information indicates that the first signal is associated with the second signal, the first indication information further indicates a type of the second signal, and the type of the second signal comprises one of a communication signal, a sensing signal, a sensing-communication signal, or a power transfer signal.

20. The apparatus according to any one of claims 17 to 19, wherein when the first indication information indicates that the first signal is associated with the second signal, the first indication information further indicates a relative power value between the first signal and the second signal.

21. The apparatus according to any one of claims 17 to 20, wherein the transceiver module is further configured to:
when the first indication information indicates that the first signal is associated with the second signal, send second indication information, wherein the second indication information indicates at least one of a sequence of the second signal, a frequency domain coefficient of the second signal, or a time domain position of the second signal.

22. The apparatus according to any one of claims 17 to 21, wherein the first indication information is carried in downlink control information DCI.

23. A communication apparatus, comprising a processor, wherein the processor is coupled to a memory, and the memory is configured to store instructions; and when the processor invokes the instructions, the method according to any one of claims 1 to 5 is performed or the method according to any one of claims 6 to 11 is performed.

24. A computer-readable storage medium, wherein the computer-readable storage medium stores a computer program, and when the computer program is run on a communication apparatus, the method according to any one of claims 1 to 5 is performed or the method according to any one of claims 6 to 11 is performed.

25. A computer program product, wherein the computer program product comprises instructions, and when the instructions are executed, the method according to any one of claims 1 to 5 is performed or the method according to any one of claims 6 to 11 is performed.
